# EUROPÄISCHE PATENTSCHRIFT

(11) **EP 1 623 957 B1**
(45) Veröffentlichungstag und Bekanntmachung des Hinweises auf die Patenterteilung: **06.02.2008**
(21) Anmeldenummer: 05450026.9
(22) Anmeldetag: 10.02.2005
(51) Int. Cl.: C01B 3/26, C01B 3/28, C01B 3/34, C01B 3/38, C01B 31/02

(54) **Verfahren und Vorrichtung zur Herstellung von Wasserstoff**
Process and apparatus for the production of hydrogen
Procédé et dispositif pour la production d'hydrogène

(43) Veröffentlichungstag der Anmeldung: 08.02.2006
(73) Patentinhaber: Electrovac AG, 3400 Klosterneuburg (AT)
(72) Erfinder: Mauthner, Klaus, 9131 Grafenstein (AT); Hammel, Ernst, 1140 Wien (AT)
(74) Vertreter: Sonn & Partner Patentanwälte

(56) Entgegenhaltungen:
- US-A- 3 284 161
- US-A1- 2002 007 594
- US-A1- 2004 253 168
- MURADOV N: "Hydrogen via methane decomposition: an application for decarbonization of fossil fuels" INTERNATIONAL JOURNAL OF HYDROGEN ENERGY, ELSEVIER SCIENCE PUBLISHERS B.V., BARKING, GB, Bd. 26, Nr. 11, November 2001 (2001-11), Seiten 1165-1175, XP004306166 ISSN: 0360-3199
- AIELLO R ET AL: "Hydrogen production via the direct cracking of methane over Ni/SiO2: catalyst deactivation and regeneration" APPLIED CATALYSIS A: GENERAL, ELSEVIER SCIENCE, AMSTERDAM, NL, Bd. 192, Nr. 2, 14. Februar 2000 (2000-02-14), Seiten 227-234, XP004272158 ISSN: 0926-860X

## Beschreibung

Die vorliegende Erfindung betrifft ein Verfahren zur Herstellung eines wasserstoffhältigen Gasgemisches aus einem geeigneten kohlenwasserstoffhältigen Feedgas in einem Reformer.

Beschrieben werden Verfahrensverbesserungen zur katalytischen Spaltung von Kohlenwasserstoffen in Wasserstoff und festen Kohlenstoff, mit dem Grundgedanken die CO₂-Abgabe an die Umwelt zu minimieren bzw. zu vermeiden. Sie beschreibt auch Verbesserungen bezüglich wirtschaftlicher Prozessführung, zusätzlich ist auch dem Einsatz von Biomasse und daraus resultierenden Material Rechnung getragen, welche als potentielle Rohstoffquelle für Kohlenwasserstoff erachtet werden. Dies ist auch ein Beitrag zur wirtschaftlich, umweltfreundlichen Nutzung von Wasserstoffenergieszenarien.

Wasserstoff, ein farb- und geruchloses Gas, nahezu unlöslich in Wasser, wurde 1766 vom englischen Wissenschaftler Henry Cavendish entdeckt. Im Labor wird es durch Elektrolyse von Wasser, oder durch Einwirkung von verdünnten Säuren auf Zink oder Eisen hergestellt. Industriell wird es durch Zweistufenverfahren hergestellt, wobei in der Ersten durch Verbrennung von Kohlenwasserstoffen mit Wasserdampf CO und H₂ erzeugt wird, und in der zweiten Stufe CO durch die Wassergasreaktion (CO + H₂O -> CO₂ + H₂) zu CO₂ konvertiert wird. Kohlendioxid wird dann durch Wäsche entfernt.

Das Interesse an Wasserstoff als Energieträger wuchs in den frühen 70igern, während der ersten Ölkrise, als Wissenschaftler Szenarien bezüglich der Rolle von Wasserstoff entwickelten. Während der 80er Jahre wurden große Anstrengungen unternommen neue Technologien bezüglich erneuerbarer Energieträger und Wasserstoff zu entwickeln, mit dem Ziel die Abhängigkeit von fossilen Energieträgern zu vermindern oder überhaupt davon abzukommen.

Heutigem Wissen zufolge wird Wasserstoff das Potenzial eines zukünftigen Energieträgers zugeschrieben, welcher weitgehend von konventionellen Ressourcen unabhängig ist. Schlüsseltechnologien dafür sind sowohl die Wasserstoffproduktion, dessen Speicherung, Transport und Umwandlung in Energie.

95% der heutigen weltweiten Wasserstoffproduktion stammen aus kohlenstoffhältigen Rohmaterialien, zumeist fossilen Ursprungs. Die meisten konventionellen Prozesse konvertieren besagten Kohlenstoff zu CO₂, welcher in die Atmosphäre entweicht. Das Wissen um den Einfluss von Treibhausgasen auf globale Klimaveränderungen bedingt nun diese konventionellen Ansätze neu zu überdenken. Auch darf davon ausgegangen werden, dass die Untertagslagerung von gesammelten CO₂, soweit gekoppelt an herkömmliche Steam-Reforming Prozesse, nicht so schnell zur absolut sauberen Herstellung von Wasserstoff aus fossilen Energieträgern führen wird.

Grundsätzlich stehen zur Herstellung von Wasserstoff aus Kohlenwasserstoffen zwei Wege offen; nämlich die oxidierende und nicht-oxidierende Umwandlung.

Das Steam-Reforming von Erdgas (in erster Linie Methan), auch als SMR bezeichnet, ist ein sehr weit entwickelter und kommerziell umgesetzter Prozess, womit 48 % der weltweiten Wasserstoffproduktion bewerkstelligt wird. Diese Technologie ist auch mit anderen Rohstoffen wie Ethan oder Naphta machbar, jedoch ist die Effizienz mit solch höhermolekularen Stoffen geringer (C.E. Grégoire Padró and V. Putsche, "Survey of the Economics of Hydrogen Technologies", September 1999, National Renewable Energy Laboratory). Die SMR Technologie fußt auf der Reaktion von Methan mit Wasserdampf in Gegenwart eines Katalysators. Industriell gesehen läuft der Prozess bei ca. 800°C und einem Druck von 2.5 MPa. Die erste Prozessstufe umfasst die Konversion von Methan mit Wasserdampf zu CO und Wasserstoff. In der zweiten Stufe, auch als Wasser-Gas-Reaktion bezeichnet, wird CO weiter mit Wasserdampf umgesetzt und liefert CO₂ und weiteren Wasserstoff. Obwohl derartig hergestellter Wasserstoff einen größeren Energieinhalt als Methan aufweist, ist durch den produktionsbedingten Energieaufwand seine effektive Energieausbeute auf 65% begrenzt. Das anfallende CO₂ wird mittels Membranen von Produktgas abgetrennt, welches in weiteren Prozessschritten von anderen Verunreinigungen befreit wird. Dieses in diesen Schritten anfallende Gas, welches immerhin zu 60 % aus brennbaren Bestandteilen besteht, wird in den Reformer rückgeführt.

Unter Bezugnahme auf das Kyoto Abkommen und verschiedene nationale Legislaturen, welche das Ziel verfolgen Treibhausgase zu minimieren, ist der größte Nachteil des SMR Verfahrens sein hoher CO₂ Ausstoß. Diesen zu verhindern ist ein zentraler Punkt der gegenständlichen Erfindung. Überdies gibt der hier beschriebene Prozess die wirtschaftliche Umwandlung von Kohlenwasserstoff in Wasserstoffgas und zusätzlich verwertbaren faserförmigen Kohlenstoff an.

Nicht-oxidierende Verfahren umfassen thermische Zersetzung, auch als Temperatur induzierte Dissoziation bezeichnet, Pyrolyse oder Cracken von Kohlenwasserstoffen zu Wasserstoff und Kohlenstoff.

Thermische Zersetzung von Erdgas wird seit langem durchgeführt und ist einer der wichtigsten Verfahren der Rußproduktion. In diesem Zusammenhang wird Erdgas bei hoher Temperatur im Bereich von 1200 bis 1800°C zu Wasserstoff und Ruß zersetzt, wobei vorzugsweise Luft, Sauerstoff oder Wasserdampf zugemischt wird, um sowohl den gebildeten Ruß zu modifizieren als auch die Reaktortemperatur aufrecht zu erhalten. Allgemeines Schrifttum zu diesem Thema ist aus der Monographie, Winnacker-Küchler, Bd. 3, anorganische Technologie II, 4. Ausgabe, Carl Hanser Verlag, 1983, zu entnehmen. Eine Neuentwicklung betreffend Methanzersetzung wurde kürzlich von der norwegischen Fa. Kvaemer vorgestellt, wobei Wasserstoff und Ruß in einem Hochtemperaturplasma hergestellt wird (CB&H Prozess, Proc. 12th World Hydrogen Energy Conference, Buenos Aires, 697, 1998). Vorteile dieses plasma-chemischen Prozesses sind hohe thermische Effizienz (> 90%) und Reinheit des hergestellten Wasserstoffes (98 Vol.%). Allerdings ist es ein sehr energieintensiver Prozess.

Um die hohen Reaktionstemperaturen zu vermindern wurden katalysatorunterstützte Prozesse vorgeschlagen. Dabei stellte sich heraus, dass Übergangsmetalle hohe Aktivität bezüglich der Zersetzung von Methan zeigen. Allerdings mit dem Nachteil, dass sich Kohlenstoffschichten auf der Katalysatoroberfläche ablagern. Zumeist wurde der so gebildete Kohlenstoffbelag unter Luftzutritt abgebrannt um den Katalysator zu regenerieren, was wiederum zur Folge hat, dass der gesamte Kohlenstoff zu CO₂ konvertiert wird und Wasserstoff das alleinige verwertbare Produkt ist.

Die US 1 868 921, Schmidt et al., berichtet über die Umwandlung ungesättigter Kohlenwasserstoffe, vorzugsweise Ethylen, zu Ruß mittels auf Kieselgur oder ZnO aufgebrachten Nickel- bzw. Kobalt-Katalysatoren bei Temperaturen um 600°C, erwähnt jedoch in keiner Weise nennenswerte Synthese von Wasserstoff. Das US Patent 2 760 847, Oblad et al., behandelt die Zersetzung niedermolekularer Kohlenwasserstoffe zur Erzeugung von Wasserstoff durch Kontaktreaktion an Übergangsmetallen der Gruppen VI/b und VIII des Periodensystems der Elemente welche in flüssiger Wirtsmetallphase dispergiert sind. Das US Patent 3 284 161, Pohlenz et al., beschreibt einen Prozess zur kontinuierlichen Herstellung von Wasserstoff mittels katalytischer Zersetzung gasförmiger Kohlenwasserstoffe. Methan wird in einer Katalysatorwirbelschicht bei Temperaturen zwischen 815 und 1093°C zerlegt. Auf Träger abgeschiedene Ni, Fe und Co Katalysatoren, vorzugsweise Ni/Al₂O₃, werden in diesem Prozess eingesetzt. Der mit Kohlenstoff belegte Katalysator wird kontinuierlich dem Reaktor entnommen und der Kohlenstoff in einem Regenerator abgebrannt, worauf der wiedergewonnene Katalysator in den Reaktor rückgeführt wird.

Die Patentanmeldung US 2004/253168 offenbart ein Verfahren zur Herstellung eines wasserstoffhältigen Gasgemisches und nanostrukturierten Kohlenstoffpartikeln aus einem Feedgas aus Kohlenwasserstoffen, wobei das ganze Feedgas in einem Reaktor mit einem nanostrukturierten Katalysator aus Kohlenstoff kontaktiert wird und dabei einerseits in ein im Wesentlichen CO- und CO₂-freies, wasserstoffreiches Gasprodukt und anderseits in isotropen, nanostrukturierten Kohlenstoff welcher am Katalysator anhaftet gespaltet wird.

Ermakova et al. untersuchte den Effekt des SiO₂ Gehalts auf Ni und Fe Katalysatoren zur Synthese von Kohlenstoff-Filamenten, wobei auch die Effizienz dieser Katalysatoren zur Darstellung von Wasserstoff vorgeschlagen wird [Ermakova et al., Catalysis Today, 77, (2002), 225-235]. Die Autoren berichten von Ni- und Fe-SiO₂ Katalysatoren, welche einen Metallgehalt zwischen 85 und 90 Gew.% aufweisen und Methan effektiv in Kohlenstoff-Filamente und Wasserstoff zerlegen. Die Katalysatorherstellung umfasst ein zweistufiges Verfahren, wobei α-Ni(OH)₂ mit großer spezifischer Oberfläche in ein SiO₂-hältiges AlkoSol eindispergiert wird und die daraus resultierende Mischung bei Temperaturen bis zu 700°C calziniert wird. Obwohl der bei 700°C reduzierte Katalysator die niedrigste spezifische Oberfläche aufwies (7 m²/g) zeigte er die höchste katalytische Aktivität. Zum Vergleich ergab der bei 250°C calzinierte Katalysator nach BET eine spezifische Oberfläche von 400 m²/g. Testversuche, wobei Methan katalytisch zersetzt wurde, ergaben, dass Methan mit 10 mg Katalysator zu 16 % zersetzt werden kann. Bei einer Reaktionstemperatur von 550°C und einem Volumenstrom von 20 mL/min Methan wurde die Katalysator-Lebensdauer mit 30 Stunden angegeben.

Submicron-Kohlenstoff-Strukturen und Graphit-Filamente wurden in jüngster Zeit breit untersucht. Auf Grund ihrer vielen besonderen Eigenschaften werden solche Materialien als funktionelle Komponente in neuartigen Werkstoffen und Funktionsteilen vorgeschlagen. Derartige synthetische Graphitstrukturen übertreffen derzeit in Anwendung befindliche vergleichbare Materialien in Bezug auf mechanische, elektrische und chemische Eigenschaften; so z.B. spezifischer elektrischer Widerstand: 10⁻⁴ Ωcm, maximale Stromtragfähigkeit: 10¹³ A/cm², thermische Leitfähigkeit: 2000 W/mK, E-Modul: 1 TPa, Zugfestigkeit: 30 GPa.

Potentielle Anwendungen für solche Materialien sind grundsätzlich weit gestreut, beginnend mit der Fähigkeit Wasserstoff zu speichern sind sie weiters einsetzbar ais Komponente in Verbundwerkstoffen, als SuperCap Material, als Speichermedium in Li-Ionen Akkumulatoren, in Feldemissionsdisplays, in PEM-Brennstoffzellen, in der Elektronik und als aktive Komponente in Aktuatoren. Aktuell, mit Zielrichtung produktorientierte Entwicklung, sind Polymer-, Metall-Matrix und Kohlenstoff-Kohlenstoff-Verbundwerkstoffe, Feldemissionskathoden, Elektroden und Membrane für Brennstoffzellen-Anwendungen hervorzuheben. Um solche Entwicklungen jedoch erst zu ermöglichen, ist es notwendig Produktionsmittel und Syntheseprozesse bereitzustellen, welche auch die Herstellung großer Mengen zu marktgängigen Preisen erlauben. Es ist daher leicht verständlich, dass die Einsatzstoffe leicht und in ausreichender Menge, innerhalb von geforderten Spezifikationsgrenzen, verfügbar sein und die einzelnen Syntheseschritte weitgehend automatisiert ablaufen müssen.

Nachdem mittlerweile etwas mehr als 30 Jahre verstärkt daran geforscht wurde, wie synthetische Graphit-Fasern mit weniger als 1 µm Durchmesser, jedoch weit über 1 µm Länge entstehen, wurden eine beträchtliche Anzahl von Veröffentlichungen geschrieben, welche nunmehr doch etwas Einblick in dieses noch immer nicht ganz geklärte Phänomen bringen. Es haben sich zumindest ein paar allgemein akzeptierte Basisfakten zu diesem Thema ergeben:
- Als Katalysatoren geeignet sind die Übergangselemente der VIII Gruppe des Periodensystems der Elemente, Fe, Ni und Co, welche in der Lage sind, in bestimmten Temperaturbereichen metastabile Me₃C Zementitphasen in Gegenwart von Kohlenstoff zu bilden. Obwohl gewisse kinetische Stabilität vorliegt, sind solche Me-C Systeme thermodynamisch nur dann im Gleichgewicht wenn Metall und Graphit als getrennte Phasen vorliegen.
- Die Kohlenstoff liefernde Spezies muss zumindest in einem gegebenen Zeitintervall eine stabile Dampf bzw. Gasphase bilden.
- Der Durchmesser der katalytisch gebildeten Fasern oder Whisker steht im direkten Zusammenhang mit der Größe der Katalysatorpartikel.

Vom akademischen Standpunkt aus wurde schon in den frühen 50iger Jahren auf dem Gebiet der Whiskertechnologie geforscht. Dabei wurden in erster Linie Metal-, Metalloxid-, Metallcarbid- und Carbonwhiskers untersucht. Da jedoch keine größeren Mengen synthetisiert werden konnten, ist kaum Datenmaterial bezüglich Produkte und Materialien mit solchen Kohlenstoff Filamenten verfügbar. Andererseits war man mit der Entwicklung und Verarbeitung von schon kommerziell erhältlichen Pitch- und PAN-Kohlefasern beschäftigt. Nichtsdestoweniger wurde schon zu dieser Zeit das Potential der hier angesprochenen Materialklasse erkannt und schon vor 1980 in wissenschaftlichen Publikationen diskutiert.

Eine Schlüsselpublikation, welche röhrenförmige Graphit-Filamente zum zentralen Thema hat, wurde von Bacon 1960 veröffentlicht [Bacon, R. J. Appl. Phys. 1960, 31, 285.]. Diese Arbeit und darin weiterleitende Literatur beschreibt die Chemie und Wachstumsbedingungen von Graphitwhiskern, sowohl durch Katalysatoren als auch im elektrischen Lichtbogen. Letztere Variante ermöglichte die Entdeckung der Fullerene. Messungen an einzelnen Graphitwhiskern, welche außerordentlich hohe E-Moduli und sowohl elektrische als auch thermische Leitfähigkeiten ergaben, legten nahe, diese als Verstärkung in Verbundwerkstoffen und elektrisch leitende Komponente in intelligenten Kunststoffen einzusetzen.

Aufgabe der vorliegenden Erfindung ist es nun, ein Verfahren zur Herstellung eines wasserstorrnäitigen Gasgemisches aus einem geeigneten kohlenwasserstoffhältigen Feedgas in einem Reformer vorzusehen, wobei einerseits die Bildung von möglichst reinem Wasserstoff mit geringem CO₂-Anteil und andererseits ein kostengünstiges Verfahren zur Herstellung von Nanokohlenstoff ermöglicht wird.

Diese Aufgabe wird erfindungsgemäß dadurch gelöst, dass zumindest ein Teil des Feedgases vor Eintritt in den Reformer abgezweigt und mindestens einem Sekundärreformer zugeführt wird, wobei das Feedgas im Sekundärreformer mit einem nanostrukturierten Katalysator kontaktiert wird und die im Wesentlichen CO- und CO₂-freien Abgase des Sekundärreformers entweder mit dem aus dem Reformer austretenden wasserstoffhältigen Gasgemisch kombiniert oder in den Reformer eingebracht werden. Dabei wird erfindungsgemäß im Sekundärreformer ein mit Wasserstoff angereichertes Gas produziert, welches durch katalytische Zersetzung des Feedgases einen Wasserstoffgehalt zwischen 5 und 99.99999 Vol. % und einen CO und CO₂ Gehalt < 1 Vol.-% aufweist. Gasströme mit einem Wasserstoffgehalt grö-ßer oder um 80 Vol. % können direkt einer weiteren Gasreinigung unterworfen werden, wobei am Ende reiner Wasserstoff erhalten wird. Bei geringeren H₂ Konzentrationen, < 80 Vol.%, ist vorgesehen, das Abgas des Sekundärreformers in den Reformer einzuspeisen. Daraus sich offensichtlich ergebende Vorteile sind: i.) verminderte Belegung des Reformerkatalysators mit inhibitierenden Kohlenstoffbelägen durch u. a. geringere eingebrachte Kohlenstoffmengen; ii.) durch die hohe Wärmekapazität von Wasserstoff werden beträchtliche Wärmemengen aus dem Sekundärreformer in den Reformer mitgenommen, woraus ein energetisch günstigerer Betrieb des Reformers resultiert; iii.) der CO₂ Gehalt des nach diesem Prozess erhaltenen Synthese-Gases ist beträchtlich vermindert. Das am Ende anfallende CO₂ wird jedoch als wertvoller Reaktant, neben anderen möglichen reaktiven Substanzen, zur Oxidation bzw. Oberflächen-modifizierung des im Sekundärreformer katalytisch erzeugten Nanokohlenstoffes benötigt und somit nutzbringend verwertet. Die oxidierende Nachbehandlung des Nanokohlenstoffes wird bei Temperaturen zwischen 300 und 2000°C bewerkstelligt. Wird diese Oxidationsbehandlung bei einer Temperatur gleich oder größer 500°C durchgeführt, wird CO₂ substantiell in CO umgewandelt welches wiederum, in den gegebenenfalls dem Reformer nachgeschalteten Shift-Reaktor eingespeist, positiv zur Mengenausbeute bezogen auf Wasserstoff beiträgt. Zusätzliche CO Einspeisung in den Shift Reaktor wirkt sich überdies positiv auf den Energiehaushalt dieser Komponente aus, da die Wassergasreaktion (CO + H₂O = CO₂ + H₂) bekannterweise sehr exotherm ist. Der erfindungsgemäß verwendete nanostrukturierte Katalysator kann dabei z.B. auch in Form eines gepressten Pellets vorliegen, welches ausreichende Porosität aufweist, sodass die gesamte aktive Oberfläche des Katalysators dem eintretenden Feedgas zur Verfügung steht.

Vorzugsweise werden erfindungsgemäß die Abgase des Sekundärreformers vor Eintritt in den Reformer vorgewärmt, was unter anderem durch die hohe Wärmekapazität des schon vorhandenen Wasserstoffs leicht erzielt und weiters durch Mitnahme beträchtlicher Wärmemengen aus dem Sekundärreformer bewerkstelligt wird, woraus ein energetisch günstigerer Betrieb des Reformers resultiert.

Gemäß einer weiteren Ausführungsform der vorliegenden Erfindung werden die Abgase des Reformers zur Entfernung von Kohlenmonoxid nachverbrannt. Da die Abgase des Sekundärreformers erfindungsgemäß mit den Abgasen des Reformers kombiniert werden, geschieht dies kostengünstig und mit geringem Energieaufwand in einem Shift-Reaktor, der einem Reformer ohnehin zumeist nachgeordnet ist. Weiters kann das aus dem Shift-Reaktor austretende CO₂-hältige Abgas zur Oxidation bzw. Oberflächenmodifizierung von Nano-Kohlenstoff verwendet werden. Beispielsweise kann der mit Nano-Kohlenstoff bedeckte verbrauchte Katalysator in einem Nachreaktor gesammelt und dort einer Oxidation bzw. Oberflächenmodifizierung unterworfen werden, ebenso ist möglich bei Vorsehung mehrerer Sekundärreformer zwischen diesen hin- und her zu schalten und in den jeweils mit Nano-Kohlenstoff beladenen Sekundärreformern die Oxidation bzw. Oberflächenmodifizierung vorzunehmen.

Günstig ist auch, wenn die Abgase des Sekundärreformers mit dem aus dem Reformer austretenden wasserstoffhältigen Gasgemisch kombiniert und vor der Nachverbrennung abgekühlt werden, um die Rückreaktion der Wassergasreaktion zu vermeiden. Die vorliegende höhere Wasserstoffkonzentration, welche auf Grund des Sekundärreformers erreicht wird, gestattet auch eine Verbesserung der Wärmeabfuhr der aus der Wassergasreaktion freiwerdenden Wärme. Gleichzeitig kann durch die Abkühlung, welche vorzugsweise in einem Wärmetauscher stattfindet, auch der für den Reformer benötigte Wasserdampf erzeugt bzw. erhitzt werden.

Weiters wird bevorzugt wenn der nanostrukturierte Katalysator auf einem Träger angeordnet ist. Es ist soweit bekannt, dass nanostrukturierte Katalysatoren, wenn auf inerte Materialien, wie SiO₂, MgO, Al₂O₃, SiC, Graphit etc, aufgebracht, die Fähigkeit besitzen unter Temperatureinwirkung dünnste Kohlenstoff-Fasern katalytisch zu erzeugen. Hingegen offenbart die gegenständliche Erfindung einige zusätzliche Neuerungen bezogen auf deren duale Effizienz, sowohl Wasserstoff als auch Nanokohlenstoff effizient zu erzeugen, was der frei zugänglichen Literatur nicht zu entnehmen ist.

Gemäß noch einer weiteren Ausführungsform der vorliegenden Erfindung ist der Träger ein flächiger Träger, wodurch in einfacher Weise die gesamte katalytisch aktive Oberfläche des Katalysatormaterials genutzt wird.

Bevorzugt wird, wenn der Träger partikelförmige keramische Körper oder partikelförmige Glaskörper umfasst, welche einerseits eine größere Oberfläche aufweisen als flächige Träger und andererseits auch in Wirbelschichten eingesetzt werden können. Weiters weisen partikelförmige Träger auch eine höhere mechanische Stabilität auf.

Weiters ist günstig, wenn im Sekundärreformer der nanostrukturierte Katalysator kontinuierlich ein-und ausgeschleust wird. Dadurch kann ein kontinuierlicher Betrieb des Sekundärreaktors gewährleistet werden und gleichzeitig können der am nanostrukturierten Katalysator abgeschiedene Nanokohlenstoff kontinuierlich abgetrennt und der weiteren Verwendung zugeführt werden.

Vorzugsweise werden der nanostrukturierte Katalysator und das Feedgas im Sekundärreformer im Gleichstrom geführt. Mittels dieser Führung wird eine höhere Verweilzeit des Feedgases am Katalysator erreicht, dadurch ergibt sich eine bessere Gasausnutzung und höhere Konversionsraten.

Gemäß noch einer weiteren Ausführungsform der vorliegenden Erfindung werden der nanostrukturierte Katalysator und das Feedgas im Sekundärreformer im Gegenstrom geführt. Dadurch wird der Katalysator schneller reduziert und erreicht dadurch eine höhere Effizienz.

Weiters wird bevorzugt, das Feedgas im Sekundärreformer bei einer Temperatur im Bereich von 300°C bis 1400°C mit dem nanostrukturierten Katalysator zu kontaktieren. Durch Auswahl der geeigneten Temperatur können Wachstum und Struktur des Nanokohlenstoffs beeinflusst bzw. sogar gesteuert werden.

Gemäß noch einer weiteren Ausführungsform der vorliegenden Erfindung wird das Feedgas im Sekundärreformer bei einer Temperatur im Bereich von 400°C bis 700°C mit dem nanostrukturierten Katalysator kontaktiert. Bei diesem Temperaturbereich weisen erfindungsgemäß bevorzugt eingesetzte Ni-Composite-Katalysatoren sehr hohe Effizienz auf.

Vorzugsweise wird der Katalysator ausgewählt aus der Gruppe bestehend aus Gruppe VIII-Übergangselementen. Diese Katalysatoren sind an sich für die Herstellung von Nano-Kohlenstoff bekannt.

Günstig ist es auch, wenn der Katalysator ein Composite-Katalysator umfassend ein Mitglied ausgewählt aus der Gruppe bestehend aus Erdalkalimetalloxiden, Silizium, Siliziumoxid und Mischungen hievon ist. Solche Katalysatoren sind besonders für Filamentherstellung geeignet, da die Inertkomponente im Inneren des Katalysatorpartikels einen Konzentrationsgradienten bezüglich des im Metall metastabil gelösten Kohlenstoffs bewirkt.

Bevorzugt wird, wenn als Katalysator Nickel und/oder Eisen zum Einsatz kommen. Die erfindungsgemäß bevorzugt zum Einsatz kommenden Katalysatoren basieren auf Ni, Fe und NiFe und weisen dabei noch bevorzugter Composite-Charakter auf, mit einer gegenüber der Kohlenwasserstoffzersetzung inerten Komponente. Bezogen auf die Reaktionstemperatur ist mit den hier angegebenen Katalysatoren, je nach Zusammensetzung, ein Wirkungsbereich von 300 bis 1400°C abgedeckt. Erfindungsgemäß wird mit dem Verfahren die grösste Effizienz mit Methan als Kohlenwasserstoff erzielt. Dies auch mit dem Hintergrund, als dass Methan das günstigste C/H Verhältnis aufweist und obendrein in ausreichender Menge aus biologischen Prozessen heraus gewonnen werden kann und die Unabhängigkeit von Kohlenwasserstoffen fossilen Ursprungs gewährleistet ist. Ohne auf eine Theorie festgelegt zu sein, lassen sich die Katalysatoren in ihrer Grundstruktur in einfacher Weise auch für andere Kohlenwasserstoffe spezifisch effizient gestalten. Somit sind auch höhere Kohlenwasserstoffe der Alkane, Alkene, Alkine, cyklische Kohlenwasserstoffe und deren thermische Zersetzungsprodukte, soferne sie in der Dampf bzw. Gasphase unter den angegebenen Reaktionstemperaturen existent sind, durchaus geeignet den katalytischen Zersetzungsprozess zu durchlaufen. Wird auf den Reinheitsgrad des so produzierten Wasserstoffes kein so großer Anspruch gelegt, können in diesem Verfahren auch Kohlenwasserstoffgase mit Verunreinigungen, wie Stickstoff, Sauerstoff oder Schwefel, über den Sekundärreformer verarbeitet werden. Die Verunreinigungen können sowohl in der Luft als auch im Kohlenwasserstoff eingebunden (z.B. als Bestandteil einer funktionellen Gruppe) sein. Somit lassen sich akzeptierbare Grenzkonzentrationen des Zersetzungsgases, welches den Sekundärreformer verlässt, in weiten Bereichen einstellen. Zum Einen wird dies durch die Zusammensetzung des Feedgases, zum Anderen durch die Komposition des/der Katalysator-s/-en erreicht. Wie unschwer zu verstehen liegt der Schlüssel in der Chemie Nanokohlenstoff mittels ausreichen katalytisch aktiver Katalysatoren herzustellen. Die Darstellung solcher Partikel, speziell im Hinblick auf Kontrolle der durchschnittlichen Durchmesserverteilung, wird durch Fällung von Ni, Fe, Co, oder beliebigen Mischungen davon aus wässriger Lösung unter Einstellung alkalischer Bedingungen erreicht. Damit werden Hydroxyd-Niederschläge, welche sehr große spezifische Oberflächen bilden und damit Voraussetzung für deren Nanostruktur sind, erhalten. Basische Reagenzien welche zur Einstellung von pH-Werten grösser/gleich 8 Verwendung finden, sind sowohl Alkalihydroxide, Erdalkalihydroxide, Ammoniak oder Ammoniumhydroxid. Verwendet man Alkalihydroxide muss darauf geachtet werden, dass der fertige Katalysator keine Alkalimetallverunreinigungen mehr aufweist, da diese die Aktivität des Katalysators beeinträchtigen würden. Anders ist der Sachverhalt, wenn mit Erdalkalihydroxid bzw. Erdalkalioxid gefällt wird, da Erdalkalioxid sich im Composite-Katalysator als inerte Zusatzkomponente positiv auf seine katalytische Aktivität auswirkt. Es ist allein darauf zu achten, dass der Gehalt an Erdalkalioxid 50 Gew. % nicht übersteigt, wobei jedoch vorzugsweise Gehalte von weiniger als 20 Gew. % anzustreben sind. Demzufolge sind Composite-Katalysatoren mit MgO, CaO, MgO/CaO u. a. als Inertkomponente einfach zugänglich.

Gemäß noch einer weiteren Ausführungsform der vorliegenden Erfindung wird der Katalysator im Sekundärreformer kontinuierlich oder diskontinuierlich ausgeschleust, gegebenenfalls in Abhängigkeit vom Wasserstoffgehalt im Abgas, und von anhaftenden Kohlenstoffverbindungen abgetrennt. Nach Abtrennung des Nano-Kohlenstoffs wird der ausgeschleuste Katalysator dann kontinuierlich regeneriert bzw. recycliert und kann neuerlich eingesetzt werden. Dieser Verfahrensschritt kann besonders bevorzugt automatisiert ablaufen.

Vorzugsweise wird dabei der Katalysator mechanisch von anhaftenden Kohlenstoffverbindungen abgetrennt, vorzugsweise durch Abschaben oder in einem Zyklon. Dies ist insbesondere bei Verwendung eines flächigen bzw. festen Trägers vorteilhaft.

Weiters wird bevorzugt, wenn der Katalysator chemisch von anhaftenden Kohlenstoffverbindungen abgetrennt wird, vorzugsweise durch ein Ätzverfahren. Durch z.B. ein Ätzverfahren (Säurebehandlung) können die metallischen Katalysatoren auf einfache Weise abgetrennt und recycliert werden.

Günstig ist es auch, wenn der Katalysator physikalisch von anhaftenden Kohlenstoffverbindungen abgetrennt wird, vorzugsweise durch Hochtemperaturbehandlung, Abheizen, Induktiv, durch RF oder HF. Dieses Abtrennverfahren ist für die gebildeten Nano-Kohlenstoffe besonders schonend.

Gemäß noch einer weiteren Ausführungsform der vorliegenden Erfindung kommt als Feedgas Erdgas zum Einsatz. Erdgas stellt die billigste und am leichtesten zugängliche Variante eines Feedgases dar, gegebenenfalls wird es vor dem Einsatz von Schwefelverbindungen gereinigt.

Besonders bevorzugt wird, wenn als Feedgas ein gegebenenfalls vorgereinigtes Biogas zum Einsatz kommt. Dieses ist in seiner Zusammensetzung dem Erdgas sehr nahe und erlaubt eine Abkopplung von fossilen Energieträgern.

Vorzugsweise wird ein Teil des Feedgases als Heizgas zum Beheizen des Reformers und/oder Sekundärreformers verwendet. Dadurch kann die Energiebilanz günstig beeinflusst werden, speziell wenn als Feedgas ein gegebenenfalls vorgereinigtes Biogas zum Einsatz kommt und in ausreichenden Mengen zur Verfügung steht.

Dem hier Angeführten folgend sollte es hinlänglich klar sein, dass die hier angegebene Prozessabfolge einen wichtigen Schritt zur Verbesserung der Wasserstoffproduktion aus Kohlenwasserstoffen darstellt. Angenommen es wird Methan am Ni-Kontakt bei 600°C zersetzt, erhält man ein heißes, mit Wasserstoff angereichertes Gasgemisch der Zusammensetzung 33.33 Vol.% Methan und 66.66 Vol. % H₂. Dieses wird nun in den Reformer eingespeist, wo die verbleibenden 33.33 Vol. % CH₄ mit Wasserdampf in Gegenwart eines Ni-Katalysators zu CO und H₂ umgesetzt werden. In Zahlen gefasst ergibt sich eine Reduktion der CO₂ Emission um 50 % bezogen auf das eingesetzte Methan.

Der erfindungsgemäß bevorzugt verwendete Composite-Katalysator kann wie folgt hergestellt werden:

Wie literaturbekannt, übt SiO₂ einen sehr positiven Einfluss auf die Aktivität von Übergangsmetallen der VIII. Gruppe aus. Zentraler Punkt ist auch bei diesen Katalysatoren, dass, ausgehend von in-situ erzeugten Metallhydroxid-Niederschlägen, entweder durch Parallelfällung oder unmittelbar darauf folgende Fällung das "Si" oder SiO₂ ebenso nanostrukturiert mit dem Hydroxid vereinigt wird.

Erfindungsgemäß werden SiO₂ hältige Ni und Fe Katalysatoren bzw. Ni, Fe und Ni/Fe hältige Hydroxid- oder Oxid-Pulver entweder durch Fällung von SiO₂ "auf" das Metallhydroxid, welches in Wasser, Alkohol, Aceton oder anderen geeigneten Lösungsmitteln dispergiert ist, erhalten. SiO₂ wird durch die Zersetzung von Tetraoxysilan (TEOS) durch Basenzugabe (z. B. NH₃/H₂O) direkt auf das Hydroxid abgeschieden. In weiterer Ausgestaltung der Erfindung werden substöchiometrische SiO₂-Ni(OH)₂, SiO₂-Fe(OH) ₃ oder SiO₂-Ni/Fe-Hydroxide durch direkte, einhergehende Fällung mit Basezusatz in einem Schritt erhalten. Auch in diesem Fall sei festgehalten, dass die Hauptkomponente des Composite-Katalysators das Gruppe VIII Übergangsmetall darstellt, wobei dieses zumindest in einem Verhältnis von größer als 50 mol % vorliegt, bzw. bevorzugt größer als 80 mol % und noch bevorzugter im Verhältnis von größer als 90 mol%. Werden die Katalysatorbestandteile aus organischen Lösungsmitteln (z.B. Alkohol, Aceton, THF, Acetonitril, Nitromethan u. a.) direkt ausgefällt, wobei als Fällungsreagenzien sowohl anorganische als auch organische Basen (z.B. NaOH, NH₃, NH4OH, TMEDA, u.a.) herangezogen werden können, erhält man erfindungsgemäß Niederschläge mit Composite-Charakter, welche sowohl hochmolekulare Silikon-Verbindungen, Metall-Hydroxid und Metall-Si-Metallorganyle enthalten. Diese Mischung welche den festen Niederschlag bildet, garantiert sehr große spezifische Oberflächen (> 20 m²/g) und somit die Nanostruktur dieser Composite-Katalysatoren.

Danach wird das so synthetisierte Katalysatorpulver getrocknet, wobei nicht über 150°C getrocknet werden soll, um Diffusionsvorgänge zwischen den einzelnen Komponenten und Partikel minimal zu halten, da dies zu unerwünschter Partikelaggregation führen kann, welche wiederum Sintervorgänge zwischen den einzelnen Katalysatorpartikel unter Arbeitsbedingungen bei hoher Temperatur bedingt. Dies würde zwangsläufig die Aktivität der Katalysatoren in unerwünschter Weise einschränken.

Katalysatoren, welche auf dem hier beschriebenen nasschemischen Weg synthetisiert werden, beinhalten zusätzlich Lösungsmittelmoleküle, welche durch Kalzinieren bei höherer Temperatur entfernt werden. In gewissen Fällen, z.B. bei Katalysatoren mit größerem Inertanteil, ist es von Vorteil, dass bei Temperaturen bis zu 1000°C kalziniert wird. Dieser Prozessschritt bedingt die Ausbildung individueller, kristallographischer Phasen, sowohl der Inertkomponente als auch der katalytisch aktiven Metallkomponente. Ist das Kalzinieren der Pulver angebracht, tritt bei Temperaturen über 150°C ein merklicher Abbau des Hydroxids zum Oxid ein welcher mit steigender Temperatur fortschreitet. Bei Temperaturen über 350°C ist dieser Vorgang weitgehend abgeschlossen und weitere Veränderungen des Katalysators sind somit Sintereffekten zuzuschreiben. Es ist von Vorteil das Kalzinieren unter reaktiver Atmosphäre durchzuführen. Durch Auswahl geeigneter Gasatmosphären sind sowohl Oxide, Nitride, Carbide und Mischungen der Anion-Komponenten darstellbar. Setzt man das Pulver nach gewisser Zeit bei einer bestimmten Temperatur einer reduzierenden Atmosphäre aus bleibt die Inertkomponente von der Reduktion unbeeinträchtigt und nur die Übergangsmetallkomponente wird zum Metall reduziert.

Solche von Fremdkomponenten (z.B. Lösungsmittel, thermisch labile Anionen etc.) befreite Katalysatoren sind auch direkt zugänglich. Dazu werden Ni, Fe oder beliebige Übergangsmetallverbindungen zusammen mit Verbindungen, welche die Inertkomponente oder deren Vorstufe enthalten, bei hoher Temperatur, wobei Temperaturen größer 300°C zu verstehen sind, zusammen in der Gas- oder Dampfphase zersetzt. Die Zersetzung kann auch erst an der Wand des beheizten Gefäßes stattfinden. Voraussetzung dabei ist, dass dabei Verbindungen verwendet werden, welche ausreichend flüchtig sind und zumindest kurze Zeit in der Gas bzw. Dampfphase existieren.
Das erfindungsgemäße Verfahren wird - wie bereits ausgeführt - vorzugsweise zur Herstellung hochwertiger technischer Russe, Nanoonions, Nanohorns, Nanofibers und/oder Nanotubes, welche an dem Katalysator anhaften, verwendet. Die Nano-Kohlenstoffe stellen dabei ein wertvolles Nebenprodukt der Wasserstoffherstellung dar.

Gemäß einem weiteren Aspekt der vorliegenden Erfindung wird auch eine Vorrichtung zur Herstellung eines wasserstoffhältigen Gasgemisches aus einem geeigneten Feedgas in einem Reformer (1) zur Verfügung gestellt, wobei der Reformer (1) eine Zufuhrleitung (a) mit einer in sie mündenden Heißdampf leitung (b) und eine Ableitung (c) umfasst, dadurch gekennzeichnet, dass zumindest ein Teil des Feedgases vor Eintritt in den Reformer (1) über eine in Strömungsrichtung vor der Einmündung der Heißdampfleitung (b) liegenden Leitung (d) abgezweigt und mindestens einem Sekundärreformer (2) zugeführt wird, wobei das Feedgas im Sekundärreformer (2) mit einem nanostrukturierten Katalysator kontaktiert wird und die Abgase des Sekundärreformers (2) über eine Leitung (e) entweder mit dem aus dem Reformer austretenden wasserstoffhältigen Gasgemisch in Leitung (f) kombiniert oder über Leitung (g) in den Reformer (1) eingebracht werden.

Vorzugsweise ist im Reformer (1) zusätzlich ein Wärmetauscher (3) angeordnet ist, welcher gegebenenfalls in die Leitung (g) zugeschaltet werden kann.

Günstig ist ebenfalls, wenn im Reformer (1) zusätzlich ein mit der Heißdampfleitung (b) leitungsmäßig verbundener Wärmetauscher (4) angeordnet ist und und die Abgase des Sekundärreformers (2) über eine Leitung (h) in die Dampfzufuhr (i) des Wärmetauscher (4) eingespeist werden.

Gemäß einer bevorzugten Ausführungsform werden die Abgase des Reformers (1) über die Ableitung (c) in einen Wärmetauscher (5) geführt und der entstehende Dampf in die Dampfzufuhr (i) des Wärmetauscher (4) eingespeist.

Weiters ist günstig, wenn die aus dem Wärmetauscher (5) austretenden Abgase über eine Leitung (j) in einen Verbrennungsreaktor (6) zur Entfernung von Kohlenmonoxid geführt werden.

Gemäß noch einer weiteren bevorzugten Ausführungsform der vorliegenden Erfindung umfasst der Sekundärreformer (2) eine Zu- und Abfuhreinrichtung (7) zur kontinuierlichen Ein- und Ausschleusung des nanostrukturierten Katalysators.

Auch wird es bevorzugt, wenn ein Teil des Feedgases über eine Leitung (k) von der Leitung (d) abgezweigt wird und über die Leitung (k) dem Reformer (1) und/oder dem Sekundärreformer (2) als Heizgas zugeführt wird.

Die Vorteile der obgenannten Ausführungsformen der Vorrichtung gemäß der vorliegenden Erfindung ergeben sich aus den zugehörigen obgenannten bevorzugten Ausgestaltungen des erfindungsgemäßen Verfahrens.

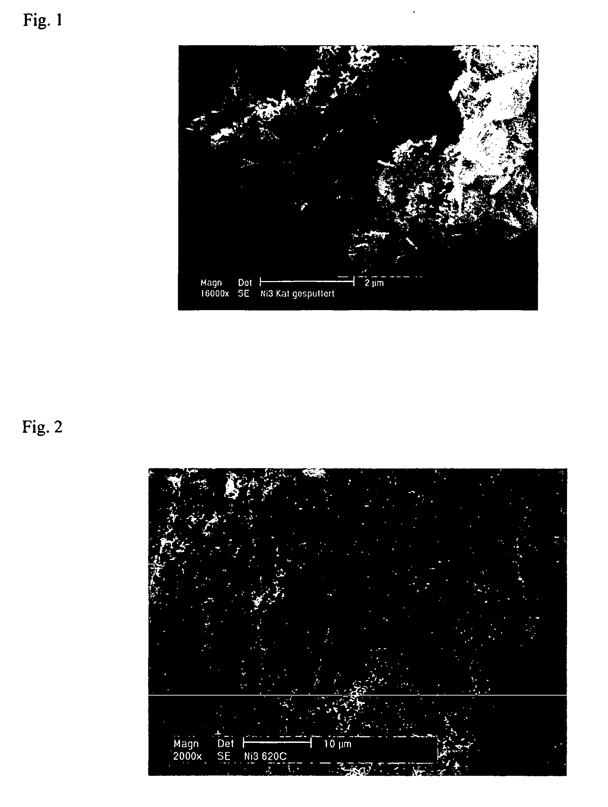

Die vorliegende Erfindung wird nun unter Bezugnahme auf die Figuren 1 und 2 in den beiliegenden Zeichnungen näher erläutert:
Ni(OH)₂ wurde durch Ammoniakfällung bei pH 9 aus einer wässrigen Lösung von Nichelnitrat hergestellt.

Der Niederschlag wurde in einem Büchnertrichter gesammelt, gründlich mit entionisiertem Wasser, gefolgt von Aceton gewaschen und bei 100°C während mehrerer Stunden getrocknet. 4,5g des derart hergestellten Ni(OH)₂ Pulvers wurden in 100 ml Aceton unter heftigem Rühren suspendiert und darauf mit 2 ml TEOS (Tetraethoxysilan), 5 ml Wasser und 2 ml Ammoniumhydroxid (25 %) versetzt. Die Suspension wurde über Nacht mechanisch gerührt, sodass sichergestellt war, dass praktisch alles TEOS als SiO₂ homogen auf dem Ni(OH)₂ Niederschlag aufgebracht war. Der feste Rückstand wurde abfiltriert, wie oben gewaschen und bei 120°C während mehrerer Stunden getrocknet. Fig. 1 stellt eine SEM-Aufnahme des derart hergestellten Composite-Katalysators dar.

200 mg des Composite-Katalysators wurden in ein Keramikschiffchen geladen, welches in einen Rohrofen mit einer Heißzone von 30 cm, ausgerüstet mit einem Quarzrohr von 40 mm Durchmesser und 1000 mm Länge, geschoben wurde. Das Quarzrohr wurde an beiden Enden mit geeigneten Verschlüssen, welche Gaszufuhr und Gasauslass aufwiesen, verschlossen. Das gesamte System wurde mit reinem Methan gespült. Nach Start des Aufheizens auf CVD-Reaktionstemperatur von 620°C wurde ein Methan-Gasfluss von 90 ml/min eingestellt. Die Aufheizrate betrug 10°C pro Minute und eine konstante Temperatur von 620°C wurde über 4 Stunden aufrecht gehalten. Bei Erreichen einer Temperatur von 350°C wurde im Abgas ein Ansteigen des Wasserstoffgehalts beobachtet. Nach 20 Minuten und Erreichen der Reaktionstemperatur wurde eine Wasserstoffkonzentration im Abgas von 68 Vol.-% gemessen. Während der vierstündigen Versuchsdauer fiel die Wasserstoffkonzentration kontinuierlich ab, war am Ende aber noch immer bei 51 Vol.-%. Nach Abkühlen auf Raumtemperatur wurden dem Reaktor 3,87 g Kohlenstoffnanofasern entnommen. Fig. 2 zeigt diese Kohlenstoffnanofasern, welche hohe Graphitstruktur und einen durchschnittlichen Durchmesser von 50 bis 70 nm aufweisen.

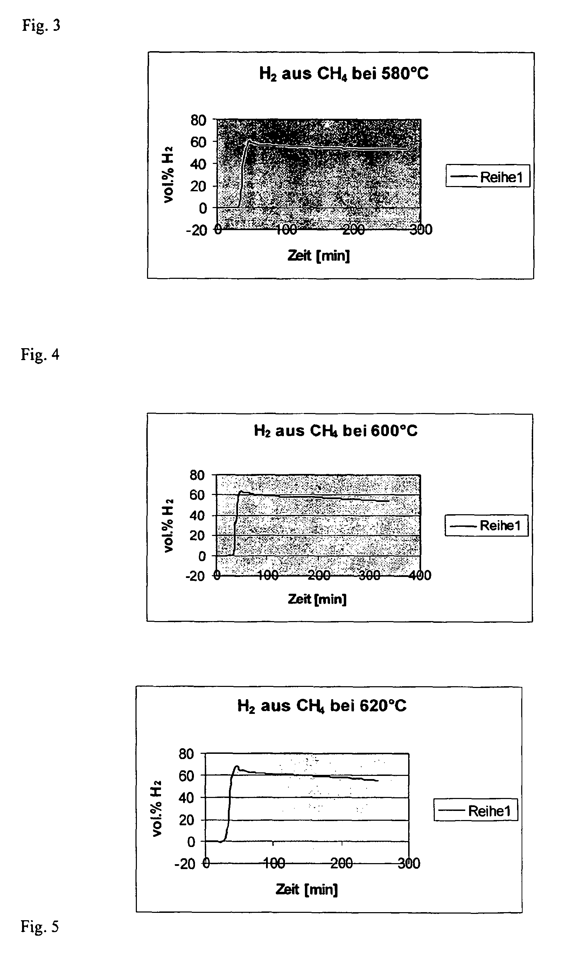

In den beiliegenden Figuren 3 bis 5 sind die gemessenen Wasserstoffkonzentrationen im Abgas des wie oben beschriebenen Sekundärreformers über einen bestimmten Zeitraum graphisch dargestellt. Aus allen drei Figuren ist ersichtlich, dass über den gesamten Versuchszeitraum eine praktisch unverändert hohe und stabile Wasserstoffkonzentration im Abgas erzielt werden konnte, was auf eine besonders hohe Aktivität des eingesetzten Ni-Composite-Katalysators, hergestellt wie zuvor beschrieben, schliessen lässt.

Die Messung der Wasserstoffkonzentration im Abgas eines wie oben beschriebenen Sekundärreformers wurde mit einem Gerät der Fa. Siemens (DE), Calomat 6, durchgeführt. Anhand der aus den Messungen gewonnenen Daten kann zu jedem Zeitpunkt der Reaktion Rückschluss auf die Aktivität des Katalysators gezogen werden. Dadurch ist es weiters möglich, durch Vorsehen eines Wasserstoffsensors im Abgasstrom des Sekundärreformers und Online-Auswertung der gewonnenen Wasserstoffkonzentrationsdaten bei einer vorhandenen Zu- und Abfuhreinrichtung zur kontinuierlichen Ein- und Ausschleusung des Katalysators die Einschleusung frischen, unverbrauchten Katalysators sowie die Ausschleusung von mit Nano-Kohlenstoff bedeckten verbrauchten Katalysators automatisiert ablaufen zu lassen.

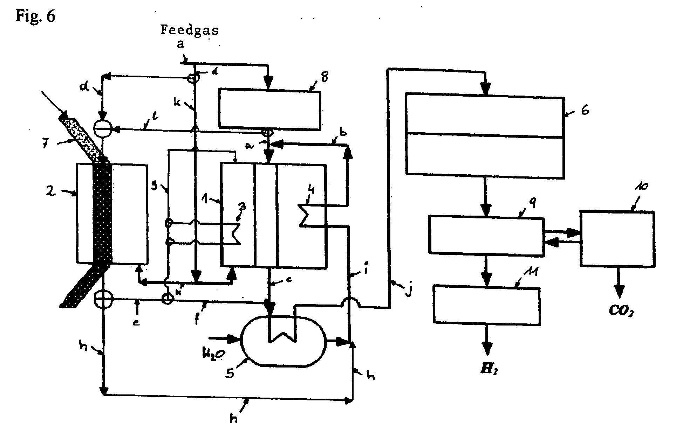

Die Vorrichtung gemäß der vorliegenden Erfindung wird nun unter Bezugnahme auf Figur 6 näher erläutert. Darin wird schematisch eine besonders bevorzugte Ausführungsform der Vorrichtung gemäß der vorliegenden Erfindung gezeigt, welche einen Reformer (1) mit einer Zufuhrleitung (a), einer in sie mündenden Heißdampfleitung (b) und eine Ableitung (c) umfasst. Vor Eintritt in den Reformer (1) wird ein Teil des kohlenwasserstoffhältigen Feedgases aus der Zufuhrleitung (a) entweder vor Eintritt in eine Entschwefelungsanlage (8) oder danach - in Abhängigkeit von der Reinheit des Feedgases bzw. der gewählten Reaktionstemperatur und Katalysatorart - über die in Strömungsrichtung vor der Einmündung der Heißdampfleitung (b) liegenden Leitungen (d) bzw. (I) abgezweigt und in einen Sekundärreformer (2) eingebracht. Ein weiterer Teil des Feedgases kann über eine Leitung (k) von der Leitung (d) abgezweigt und über die Leitung (k) dem Reformer (1) und/oder dem Sekundärreformer (2) als Heizgas zugeführt werden. In der vorliegenden Ausführungsform ist nur ein Sekundärreformer (2) vorgesehen, alternativ können ebenso mehrere Sekundärreformer parallel geschaltet werden. Dieser Sekundärreformer (2) ist ein "trockener" Reformer, d.h. er wird im Gegensatz zum Reformer (1) nicht mit Wasserdampf beaufschlagt. Der Sekundärreformer (2) weist eine Zu- und Abfuhreinrichtung (7) zur kontinuierlichen Ein- und Ausschleusung des nanostrukturierten Katalysators auf. Im Sekundärreformer (2) wird das abgezweigte Feedgas mit dem nanostrukturierten Katalysator kontaktiert, die dabei entstehenden Abgase (hauptsächlich Wasserstoff und nicht umgesetztes Feedgas) werden dann über eine Leitung (e) entweder über eine Leitung (f) mit dem über die Ableitung (c) aus dem Reformer austretenden wasserstoffhältigen Abgasgemisch kombiniert oder, falls erforderlich, über Leitung (g) in den Reformer (1) zur weiteren Feedgasspaltung mittels Wasserdampf in Gegenwart z.B. eines Nickelkatalysators eingebracht. Weiters ist im Reformer (1) zusätzlich ein Wärmetauscher (3) angeordnet, welcher gegebenenfalls in die Leitung (g) zugeschaltet werden kann. Im Reformer (1) ist zusätzlich ein mit der Heißdampfleitung (b) leitungsmäßig verbundener Wärmetauscher (4) zum Temperaturabgleich angeordnet, in den die Abgase des Sekundärreformers (2) über eine Leitung (h) in die Dampfzufuhr (i) des Wärmetauschers (4) eingespeist werden können. Die Abgase des Reformers (1) werden über die Ableitung (c) in einen Wärmetauscher (5) geführt, der entstehende Dampf wird in die Dampfzufuhr (i) des Wärmetauschers (4) eingespeist. Die aus dem Wärmetauscher (5) austretenden Abgase, welche entweder nur aus den Abgasen des Reformers (1) oder aus den kombinierten Abgasen des Reformers (1) und des Sekundärreformers (2) bestehen werden dann über eine Leitung (j) in einen Verbrennungsreaktor (6) zur Entfernung von Kohlenmonoxid geführt. Dieser Verbrennungsreaktor (6) ist hier als zweistufiger Shift-Reaktor ausgeführt, mit einem nachgeschaltetem CO₂-Wäscher (9). Mit dem CO₂-Wäscher (9) ist ein CO₂-Stripper (10) leitungsmäßig verbunden. An den CO₂-Wäscher (9) wiederum ist ein Methanator (11) zur Endreinigung des produzierten Wasserstoffs angeschlossen. Alternativ kann auch in Anhängigkeit der Qualität des im Sekundärreformer (2) gebildeten Abgases dieses direkt in den CO₂-Wäscher (9) bzw. in den Methanator (11) eingespeist werden (nicht gezeigt).

## Patentansprüche

1. Verfahren zur Herstellung eines wasserstoffhältigen Gasgemisches aus einem geeigneten kohlenwasserstoffhältigen Feedgas in einem Reformer, **dadurch gekennzeichnet, dass** zumindest ein Teil des Feedgases vor Eintritt in den Reformer abgezweigt und mindestens einem Sekundärreformer zugeführt wird, wobei das Feedgas im Sekundärreformer mit einem nanostrukturierten Katalysator kontaktiert wird und die im Wesentlichen CO- und CO₂-freien Abgase des Sekundärreformers entweder mit dem aus dem Reformer austretenden wasserstoffhältigen Gasgemisch kombiniert oder in den Reformer eingebracht werden.

2. Verfahren nach Anspruch 1, **dadurch gekennzeichnet, dass** die Abgase des Sekundärreformers vor Eintritt in den Reformer vorgewärmt werden.

3. Verfahren nach einem der Ansprüche 1 oder 2, **dadurch gekennzeichnet, dass** die Abgase des Reformers zur Entfernung von Kohlenmonoxid nachverbrannt werden.

4. Verfahren nach Anspruch 3, **dadurch gekennzeichnet, dass** die Abgase des Sekundärreformers mit dem aus dem Reformer austretenden wasserstoffhältigen Gasgemisch kombiniert und vor der Nachverbrennung abgekühlt werden.

5. Verfahren nach einem der Ansprüche 1 bis 4, **dadurch gekennzeichnet, dass** der nanostrukturierte Katalysator auf einem Träger angeordnet ist.

6. Verfahren nach Anspruch 5, **dadurch gekennzeichnet, dass** der Träger ein flächiger Träger ist.

7. Verfahren nach Anspruch 5, **dadurch gekennzeichnet, dass** der Träger partikelförmige keramische Körper oder partikelförmige Glaskörper umfasst.

8. Verfahren nach einem der Ansprüche 1 bis 7, **dadurch gekennzeichnet, dass** im Sekundärreformer der nanostrukturierte Katalysator kontinuierlich ein- und ausgeschleust wird, gegebenenfalls in Abhängigkeit des Wasserstoffgehalts im Abgas.

9. Verfahren nach Anspruch 8, **dadurch gekennzeichnet, dass** der nanostrukturierte Katalysator und das Feedgas im Sekundärreformer im Gleichstrom geführt werden.

10. Verfahren nach Anspruch 8, **dadurch gekennzeichnet, dass** der nanostrukturierte Katalysator und das Feedgas im Sekundärreformer im Gegenstrom geführt werden.

11. Verfahren nach einem der Ansprüche 1 bis 10, **dadurch gekennzeichnet, dass** das Feedgas im Sekundärreformer bei einer Temperatur im Bereich von 300°C bis 1400°C mit dem nanostrukturierten Katalysator kontaktiert wird.

12. Verfahren nach Anspruch 11, **dadurch gekennzeichnet, dass** das Feedgas im Sekundärreformer bei einer Temperatur im Bereich von 400°C bis 700°C mit dem nanostrukturierten Katalysator kontaktiert wird.

13. Verfahren nach einem der Ansprüche 1 bis 12, **dadurch gekennzeichnet, dass** der Katalysator ausgewählt ist aus der Gruppe bestehend aus Gruppe VIII-Übergangselementen.

14. Verfahren nach Anspruch 13, **dadurch gekennzeichnet, dass** der Katalysator ein Composite-Katalysator umfassend eine Mitglied ausgewählt aus der Gruppe bestehend aus Erdalkalimetalloxiden, Silizium, Siliziumoxid und Mischungen hievon ist.

15. Verfahren nach Anspruch 13 oder 14, **dadurch gekennzeichnet, dass** als Katalysator Nickel und/oder Eisen zum Einsatz kommen.

16. Verfahren nach einem der Ansprüche 1 bis 15, **dadurch gekennzeichnet, dass** der Katalysator im Sekundärreformer kontinuierlich oder diskontinuierlich ausgeschleust und von anhaftenden Kohlenstoffverbindungen abgetrennt wird.

17. Verfahren nach Anspruch 16, **dadurch gekennzeichnet, dass** der Katalysator mechanisch von anhaftenden Kohlenstoffverbindungen abgetrennt wird, vorzugsweise durch Abschaben oder in einem Zyklon.

18. Verfahren nach Anspruch 16, **dadurch gekennzeichnet, dass** der Katalysator chemisch von anhaftenden Kohlenstoffverbindungen abgetrennt wird, vorzugsweise durch ein Ätzverfahren.

19. Verfahren nach Anspruch 16 **dadurch gekennzeichnet, dass** der Katalysator physikalisch von anhaftenden Kohlenstoffverbindungen abgetrennt wird, vorzugsweise durch Hochtemperaturbehandlung, Abheizen, Induktiv, durch RF oder HF.

20. Verfahren nach einem der Ansprüche 1 bis 19, **dadurch gekennzeichnet, dass** als Feedgas Erdgas zum Einsatz kommt.

21. Verfahren nach einem der Ansprüche 1 bis 19, **dadurch gekennzeichnet, dass** als Feedgas ein gegebenenfalls vorgereinigtes Biogas zum Einsatz kommt.

22. Verfahren nach einem der Ansprüche 1 bis 21 **dadurch gekennzeichnet, dass** ein Teil des Feedgases als Heizgas zum Beheizen des Reformers und/oder Sekundärreformers verwendet wird.

23. Verwendung eines Verfahren nach einem der Ansprüche 1 bis 22 zur Herstellung hochwertiger technischer Ruße, Nanoonions, Nanohorns, Nanofibers und/oder Nanotubes, welche an dem Katalysator anhaften.

24. Vorrichtung zur Herstellung eines wasserstoffhältigen Gasgemisches aus einem geeigneten Feedgas in einem Reformer (1) welcher eine Zufuhrleitung (a) mit einer in sie mündenden Heißdampfleitung (b) und eine Ableitung (c) umfasst, **dadurch gekennzeichnet, dass** zumindest ein Teil des Feedgases vor Eintritt in den Reformer (1) über eine in Strömungsrichtung vor der Einmündung der Heißdampfleitung (b) liegenden Leitung (d) abgezweigt und mindestens einem Sekundärreformer (2) zugeführt wird, wobei das Feedgas im Sekundärreformer (2) mit einem nanostrukturierten Katalysator kontaktiert wird und die Abgase des Sekundärreformers (2) über eine Leitung (e) entweder mit dem aus dem Reformer austretenden wasserstoffhältigen Gasgemisch in Leitung (f) kombiniert oder über Leitung (g) in den Reformer (1) eingebracht werden.

25. Vorrichtung nach Anspruch 24, **dadurch gekennzeichnet, dass** im Reformer (1) zusätzlich ein Wärmetauscher (3) angeordnet ist, welcher gegebenenfalls in die Leitung (g) zugeschaltet werden kann.

26. Vorrichtung nach einem der Ansprüch 24 oder 25, **dadurch gekennzeichnet, dass** im Reformer (1) zusätzlich ein mit der Heißdampfleitung (b) leitungsmäßig verbundener Wärmetauscher (4) angeordnet ist und und die Abgase des Sekundärreformers (2) über eine Leitung (h) in die Dampfzufuhr (i) des Wärmetauscher (4) eingespeist werden.

27. Vorrichtung nach Anspruch 26, **dadurch gekennzeichnet, dass** die Abgase des Reformers (1) über die Ableitung (c) in einen Wärmetauscher (5) geführt werden und der entstehende Dampf in die Dampfzufuhr (i) des Wärmetauscher (4) eingespeist wird.

28. Vorrichtung nach Anspruch 27, **dadurch gekennzeichnet, dass** die aus dem Wärmetauscher (5) austretenden Abgase über eine Leitung (j) in einen Verbrennungsreaktor (6) zur Entfernung von Kohlenmonoxid geführt werden.

29. Vorrichtung nach einem der Ansprüche 24 bis 28, **dadurch gekennzeichnet, dass** der Sekundärreformer (2) eine Zu- und Abfuhreinrichtung (7) zur kontinuierlichen Ein- und Ausschleusung des nanostrukturierten Katalysators umfasst.

30. Vorrichtung nach einem der Ansprüche 24 bis 29, **dadurch gekennzeichnet, dass** ein Teil des Feedgases über eine Leitung (k) von der Leitung (d) abgezweigt wird und über die Leitung (k) dem Reformer (1) und/oder dem Sekundärreformer (2) als Heizgas zugeführt wird.

## Claims

1. Method for producing a hydrogen-containing gas mixture from a suitable hydrocarbon-containing feed gas in a reformer, **characterised in that** at least part of the feed gas is diverted before it enters the reformer and is supplied to at least one secondary reformer, wherein the feed gas is contacted with a nanostructured catalyst in the secondary reformer and the substantially CO and CO₂-free exhaust gases of the secondary reformer are either combined with the hydrogen-containing gas mixture which escapes the reformer or is introduced into the reformer.

2. Method according to claim 1, **characterised in that** the exhaust gases of the secondary reformer are pre-heated before they enter the reformer.

3. Method according to any one of claims 1 or 2, **characterised in that** the exhaust gases of the reformer are post-combusted for removing carbon monoxide.

4. Method according to claim 3, **characterised in that** the exhaust gases of the secondary reformer are combined with the hydrogen-containing gas mixture which escapes the reformer and cooled down before post-combustion.

5. Method according to any one of claims 1 to 4, **characterised in that** the nanostructured catalyst is arranged on a carrier.

6. Method according to claim 5, **characterised in that** the carrier is a two-dimensional carrier.

7. Method according to claim 5, **characterised in that** the carrier comprises particle-shaped ceramic bodies or particle-shaped glass bodies.

8. Method according to any one of claims 1 to 7, **characterised in that** in the secondary reformer the nanostructured catalyst is continuously fed in and fed out, optionally as a function of the hydrogen content in the exhaust gas.

9. Method according to claim 8, **characterised in that** the nanostructured catalyst and the feed gas in the secondary reformer are guided in co-current flow.

10. Method according to claim 8, **characterised in that** the nanostructured catalyst and the feed gas in the secondary reformer are guided in counter-current flow.

11. Method according to any one of claims 1 to 10, **characterised in that** the feed gas in the secondary reformer is contacted with the nanostructured catalyst at a temperature in the range of from 300°C to 1400°C.

12. Method according to claim 11, **characterised in that** the feed gas in the secondary reformer is contacted with the nanostructured catalyst at a temperature in the range of from 400°C to 700°C.

13. Method according to any one of claims 1 to 12, **characterised in that** the catalyst is selected from the group consisting of group-VIII transition elements.

14. Method according to claim 13, **characterised in that** the catalyst is a composite catalyst which comprises a member selected from the group consisting of alkaline earth metal oxides, silicon, silicon oxide, and mixtures thereof.

15. Method according to claim 13 or 14, **characterised in that** nickel and/or iron is/are used as catalyst.

16. Method according to any one of claims 1 to 15, **characterised in that** the catalyst in the secondary reformer is continuously or discontinuously fed out and separated from adhering carbon compounds.

17. Method according to claim 16, **characterised in that** the catalyst is mechanically separated from adhering carbon compounds, preferably by scraping off or in a cyclone.

18. Method according to claim 16, **characterised in that** the catalyst is chemically separated from adhering carbon compounds, preferably by an etching process.

19. Method according to claim 16, **characterised in that** the catalyst is physically separated from adhering carbon compounds, preferably by high-temperature treatment, baking out, inductively, by RF or HF.

20. Method according to any one of claims 1 to 19, **characterised in that** natural gas is used as feed gas.

21. Method according to any one of claims 1 to 19, **characterised in that** an optionally pre-purified biogas is used as feed gas.

22. Method according to any one of claims 1 to 21, **characterised in that** part of the feed gas is used as heating gas for heating the reformer and/or secondary reformer.

23. Use of a method according to any one of claims 1 to 22 for producing high-quality technical soots, nanoonions, nanohorns, nanofibers and/or nanotubes which adhere to the catalyst.

24. Device for producing a hydrogen-containing gas mixture from a suitable feed gas in a reformer (1), said reformer comprising a supply line (a) with a superheated-steam line (b) joining said supply line, and a discharge line (c), **characterised in that** at least part of the feed gas, before it enters the reformer (1), is diverted via a line (d) provided in the flowing direction in front of the junction of the superheated-vapor line (b), and is supplied to at least one secondary reformer (2), wherein the feed gas in the secondary reformer (2) is contacted with a nanostructured catalyst and the exhaust gases of the secondary reformer (2) are either combined with the hydrogen-containing gas mixture, which escapes the reformer, in line (f) via a line (e) or are introduced into the reformer (1) via a line (g).

25. Device according to claim 24, **characterised in that** a heat exchanger (3) is additionally arranged in the reformer (1), which exchanger can optionally be connected to the line (g).

26. Device according to any one of claims 24 or 25, **characterised in that** a heat exchanger (4) connected with the superheated steam line (b) via a line is additionally arranged in the reformer (1), and the exhaust gases of the secondary reformer (2) are fed into the vapor supply (i) of the heat exchanger (4) via a line (h).

27. Device according to claim 26, **characterised in that** the exhaust gases of the reformer (1) are guided into a heat exchanger (5) via the discharge line (c) and the arising vapor is fed into the vapor supply (i) of the heat exchanger (4).

28. Device according to claim 27, **characterised in that** the exhaust gases escaping the heat exchanger (5) are guided into a combustion reactor (6) via a line (j) for removing carbon monoxide.

29. Device according to any one of claims 24 to 28, **characterised in that** the secondary reformer (2) comprises a supply and discharge arrangement (7) for continuous feed-in and feed-out of the nanostructured catalyst.

30. Device according to any one of claims 24 to 29, **characterised in that** part of the feed gas is diverted from the line (d) via a line (k) and is supplied to the reformer (1) and/or the secondary reformer (2) as heating gas via the line (k).

## Revendications

1. Procédé pour produire un mélange gazeux contenant de l'hydrogène à partir d'un gaz de charge contenant des hydrocarbures approprié dans un reformeur, **caractérisé en ce qu'**au moins une partie du gaz de charge est détournée avant l'entrée dans le reformeur et est envoyée à au moins un reformeur secondaire, où le gaz de charge est mis en contact dans le reformeur secondaire avec un catalyseur nanostructuré et les gaz effluents sensiblement dépourvus de CO et de CO₂ du reformeur secondaire sont combinés avec le mélange gazeux contenant de l'hydrogène sortant du reformeur ou sont introduits dans le reformeur.

2. Procédé selon la revendication 1, **caractérisé en ce que** les gaz effluents du reformeur secondaire sont préchauffés avant l'entrée dans le reformeur.

3. Procédé selon l'une des revendications 1 ou 2, **caractérisé en ce que** les gaz effluents du reformeur sont soumis à une post-combustion pour retirer le monoxyde de carbone.

4. Procédé selon la revendication 3, **caractérisé en ce que** les gaz effluents du reformeur secondaire sont combinés avec le mélange gazeux contenant de l'hydrogène sortant du reformeur et sont refroidis avant la post-combustion.

5. Procédé selon l'une des revendications 1 à 4, **caractérisé en ce que** le catalyseur nanostructuré est disposé sur un support.

6. Procédé selon la revendication 5, **caractérisé en ce que** le support est un support plan.

7. Procédé selon la revendication 5, **caractérisé en ce que** le support comprend des corps céramiques particulaires ou des corps en verre particulaires.

8. Procédé selon l'une des revendications 1 à 7, **caractérisé en ce que**, dans le reformeur secondaire, le catalyseur nanostructuré est introduit et évacué en continu, éventuellement en fonction de la teneur en hydrogène du gaz effluent.

9. Procédé selon la revendication 8, **caractérisé en ce que** le catalyseur nanostructuré et le gaz de charge sont conduits à co-courant dans le reformeur secondaire.

10. Procédé selon la revendication 8, **caractérisé en ce que** le catalyseur nanostructuré et le gaz de charge sont conduits à contre-courant dans le reformeur secondaire.

11. Procédé selon l'une des revendications 1 à 10, **caractérisé en ce que** le gaz de charge est mis en contact dans le reformeur secondaire avec le catalyseur nanostructuré à une température dans le domaine de 300°C à 1400°C.

12. Procédé selon la revendication 11, **caractérisé en ce que** le gaz de charge est mis en contact dans le reformeur secondaire avec le catalyseur nanostructuré à une température dans le domaine de 400°C à 700°C.

13. Procédé selon l'une des revendications 1 à 12, **caractérisé en ce que** le catalyseur est choisi dans le groupe consistant en les éléments de transition du groupe VIII.

14. Procédé selon la revendication 13, **caractérisé en ce que** le catalyseur est un catalyseur composite comprenant un membre choisi dans le groupe consistant en les oxydes de métaux alcalino-terreux, le silicium, l'oxyde de silicium et leurs mélanges.

15. Procédé selon la revendication 13 ou 14, **caractérisé en ce que** le nickel et/ou le fer sont utilisés comme catalyseur.

16. Procédé selon l'une des revendications 1 à 15, **caractérisé en ce que** le catalyseur est évacué en continu ou de manière discontinue dans le reformeur secondaire et est séparé des composés carbonés qui adhèrent.

17. Procédé selon la revendication 16, **caractérisé en ce que** le catalyseur est séparé mécaniquement des composés carbonés qui adhèrent, de préférence par raclage ou dans un cyclone.

18. Procédé selon la revendication 16, **caractérisé en ce que** le catalyseur est séparé chimiquement des composés carbonés qui adhèrent, de préférence par un procédé d'attaque.

19. Procédé selon la revendication 16, **caractérisé en ce que** le catalyseur est séparé physiquement des composés carbonés qui adhèrent, de préférence par un traitement à haute température, chauffage, par induction, par RF ou HF.

20. Procédé selon l'une des revendications 1 à 19, **caractérisé en ce que** du gaz naturel est utilisé comme gaz de charge.

21. Procédé selon l'une des revendications 1 à 19, **caractérisé en ce qu'**un biogaz éventuellement pré-épuré est utilisé comme gaz de charge.

22. Procédé selon l'une des revendications 1 à 21, **caractérisé en ce qu'**une partie du gaz de charge est utilisée comme gaz de chauffage pour le chauffage du reformeur et/ou du reformeur secondaire.

23. Utilisation d'un procédé selon l'une des revendications 1 à 22 pour produire des noirs de fumée, nano-oignons, nanocornes, nanofibres et/ou nanotubes industriels de grande valeur, qui adhèrent au catalyseur.

24. Dispositif pour produire un mélange gazeux contenant de l'hydrogène à partir d'un gaz de charge approprié dans un reformeur (1) qui comprend un conduit d'amenée (a) avec un conduit de vapeur chaude (b) qui débouche dans celui-ci et un conduit d'évacuation (c), **caractérisé en ce qu'**au moins une partie du gaz de charge est détournée avant l'entrée dans le reformeur (1) par le biais d'un conduit (d) situé dans la direction d'écoulement avant l'arrivée du conduit de vapeur chaude (b) et est envoyée à au moins un reformeur secondaire (2), où le gaz de charge dans le reformeur secondaire (2) est mis en contact avec un catalyseur nanostructuré et, par le biais d'un conduit (e), les gaz effluents du reformeur secondaire (2) sont combinés avec le mélange gazeux contenant de l'hydrogène quittant le reformeur dans le conduit (f) ou sont introduits par le biais d'un conduit (g) dans le reformeur (1).

25. Dispositif selon la revendication 24, **caractérisé en ce que**, dans le reformeur (1), est disposé en outre un échangeur de chaleur (3) qui peut éventuellement être relié au conduit (g).

26. Dispositif selon l'une des revendications 24 ou 25, **caractérisé en ce que**, dans le reformeur (1), est disposé en outre un échangeur de chaleur (4) relié par un conduit au conduit de vapeur chaude (b) et les gaz effluents du reformeur secondaire (2) sont introduits par le biais d'un conduit (h) dans l'amenée de vapeur (i) de l'échangeur de chaleur (4).

27. Dispositif selon la revendication 26, **caractérisé en ce que** les gaz effluents du reformeur (1) sont conduits dans un échangeur de chaleur (5) par le biais du conduit d'évacuation (c) et la vapeur formée est introduite dans l'amenée de vapeur (i) de l'échangeur de chaleur (4).

28. Dispositif selon la revendication 27, **caractérisé en ce que** les gaz effluents quittant l'échangeur de chaleur (5) sont conduits par un conduit (j) dans un réacteur de combustion (6) pour retirer le monoxyde de carbone.

29. Dispositif selon l'une des revendications 24 à 28, **caractérisé en ce que** le reformeur secondaire (2) comprend un dispositif d'amenée et d'évacuation (7) pour l'introduction et l'évacuation continues du catalyseur nanostructuré.

30. Dispositif selon l'une des revendications 24 à 29, **caractérisé en ce qu'**une partie du gaz de charge est détournée du conduit (d) par le biais d'un conduit (k) et est envoyée par le biais du conduit (k) au reformeur (1) et/ou au reformeur secondaire (2) comme gaz de chauffage.
